# EUROPEAN PATENT SPECIFICATION

(11) **EP 3 381 648 B1**
(45) Date of publication and mention of the grant of the patent: **11.09.2019**
(21) Application number: 18164523.5
(22) Date of filing: 28.03.2018
(51) Int. Cl.: B29C 45/80, B29C 45/76, G05B 19/4061

(54) **INJECTION MOLDING MACHINE**
SPRITZGIESSMASCHINE
MACHINE DE MOULAGE À INJECTION

(30) Priority: 29.03.2017 JP 2017066174
(43) Date of publication of application: 03.10.2018
(73) Proprietor: Sumitomo Heavy Industries, Ltd., Tokyo 141-6025 (JP)
(72) Inventor: YAMAGUCHI, Hiroshi, Chiba-shi, Chiba 263-0001 (JP)
(74) Representative: Louis Pöhlau Lohrentz

(56) References cited:
- JP-A- 2014 014 991
- US-A1- 2010 244 314
- US-A1- 2017 003 672

## Description

### BACKGROUND OF THE INVENTION

### Field of the Invention

Certain embodiments of the present invention relate to an injection molding machine.

### Description of Related Art

United States Patent Application US 2010/0244314 describes an injection molding machine with a stationary mold, a movable mold, and an intermediate mold, wherein movement of the molds is automatically decelerated or stopped to avoid collision if they approach beyond a predetermined collision avoidance distance. As similar design is known from the JP 2014-014991 A.

An injection blow molding machine disclosed in Japanese Unexamined Patent Application Publication No. 2003-136571 includes a stationary platen to which a stationary mold is attached, a movable platen to which a movable mold is attached, and a support frame which is provided between the stationary platen and the movable platen. In the support frame, an intermediate mold is rotatably supported by a rotating unit such as a hydraulic motor. A plurality of first core molds protrude from one of both front and rear surfaces of the intermediate mold and a plurality of second core molds protrude from the other of both front and rear surfaces of the intermediate mold. In a mold clamping state, a cavity between the first core mold and the stationary mold is filled with a resin and injection molding of a preform is performed. If the resin is cooled to a predetermined temperature, a mold is opened and the intermediate mold is rotated by 180°. The mold is clamped again, the first core mold with the preform is inserted into a movable mold for blowing, the air is blown out, and blow molding is performed. Inthiscase, acavity between the second core mold and the stationary mold is filled with a resin, and injection molding of the preform is performed. The blow molding and the injection molding are performed at the same time.

In a mold closing process, both the movable mold and the intermediate mold are moved forward, and in a mold opening process, both the movable mold and the intermediate mold are moved rearward. In this way, both the movable mold and the intermediate mold are moved in the same direction at the same time, and thus, a molding cycle time can be shortened.

Movement ranges of the movable mold and the intermediate mold overlap each other, and thus, when both the movable mold and the intermediate mold are moved in the same direction, a succeeding mold collides with a preceding mold, and there is a concern that the mold may be damaged.

### SUMMARY OF THE INVENTION

The present invention is made in consideration of the above-described problems, and an object thereof is to provide an injection molding machine capable of preventing a collision between two molds which move in the same direction.

According to an aspect of the present invention, there is provided an injection molding machine, including: a drive unit which moves a movable mold close to or away from a stationary mold and moves an intermediate mold disposed between the movable mold and the stationary mold close to or away from the stationary mold; a movement processing unit which controls a movement of the movable mold and a movement of the intermediate mold; and a distance monitoring unit which monitors a distance between the movable mold and the intermediate mold when both the movable mold and the intermediate mold are moved in the same direction.

According to the aspect of the present invention, the injection molding machine capable of preventing a collision between two molds which move in the same direction.

### BRIEF DESCRIPTION OF THE DRAWINGS

Fig. 1 is a view showing a state when a mold opening of an injection molding machine according to an embodiment is completed.
Fig. 2 is a view showing a state when a mold of the injection molding machine according to the embodiment is clamped.
Fig. 3 is a view showing a state when a mold opening of a mold clamping unit according to the embodiment is completed.
Fig. 4 is a sectional view taken along line IV-IV of Fig. 3.
Fig. 5 is a view showing a state when a mold of the mold clamping unit according to the embodiment is clamped.
Fig. 6 is a sectional view taken along line VI-VI of Fig. 5.
Fig. 7 is a functional block diagram showing components of a controller according to the embodiment.
Fig. 8 is a graph showing an example of a movement of a movable mold and a movement of an intermediate mold in a mold closing process.
Fig. 9 is a graph showing another example of the movement of the movable mold and the movement of the intermediate mold in the mold closing process.
Fig. 10 is a graph showing still another example of the movement of the movable mold and the movement of the intermediate mold in the mold closing process.
Fig. 11 is a graph showing an example of the movement of the movable mold and the movement of the intermediate mold in a mold opening process.
Fig. 12 is a graph showing another example of the movement of the movable mold and the movement of the intermediate mold in the mold opening process.
Fig. 13 is a graph showing still another example of the movement of the movable mold and the movement of the intermediate mold in the mold opening process.
Fig. 14 is a functional block diagram showing components of a controller according to a modification example.
Fig. 15 is a graph showing an example of processing by a movement processing unit, based on a monitoring result of a movable mold position deviation monitoring unit in the mold closing process.
Fig. 16 is a graph showing an example of processing by the movement processing unit, based on a monitoring result of an intermediate mold position deviation monitoring unit in the mold closing process.
Fig. 17 is a graph showing an example of processing by the movement processing unit, based on a monitoring result of the intermediate mold position deviation monitoring unit in the mold opening process.
Fig. 18 is a graph showing an example of processing by the movement processing unit, based on a monitoring result of the movable mold position deviation monitoring unit in the mold opening process.

### DETAILED DESCRIPTION OF THE INVENTION

Hereinafter, an embodiment of the present invention will be described with reference to the drawings. The same or corresponding reference numerals are assigned to the same or corresponding configurations in each drawing, and descriptions thereof are omitted.

### Injection Molding Machine

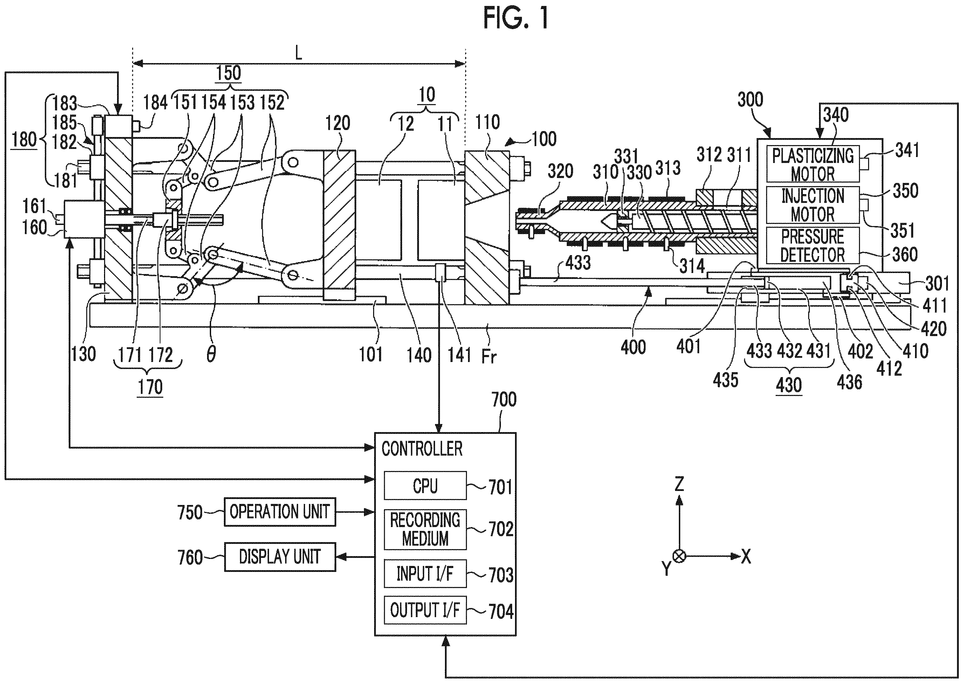

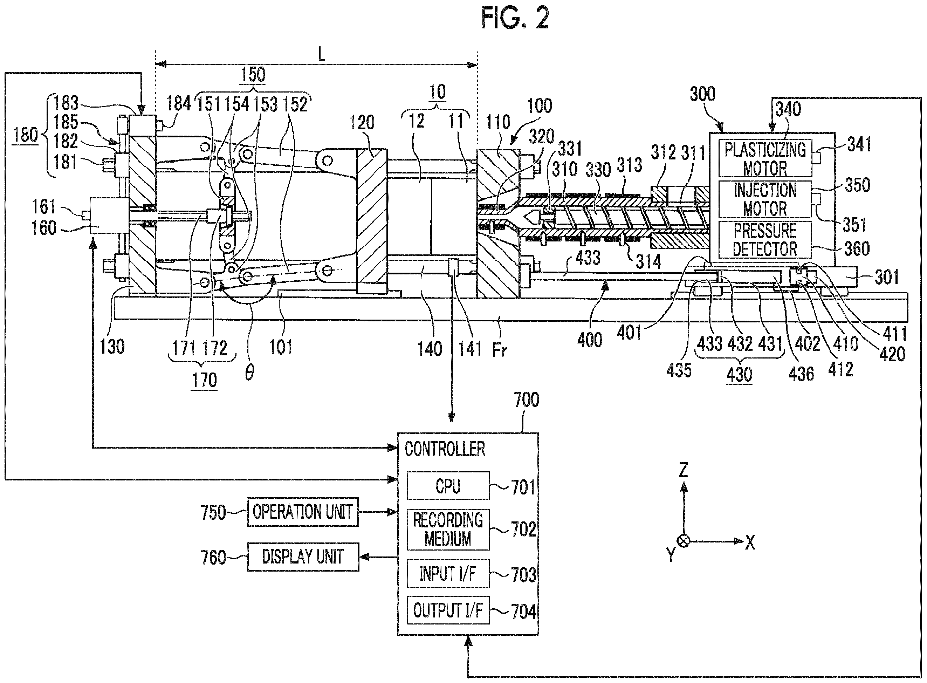

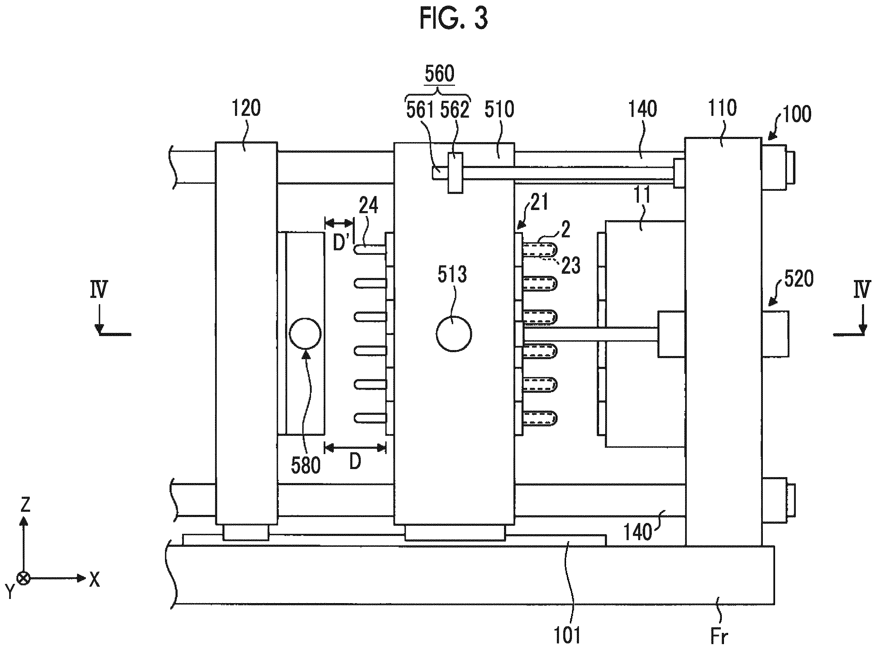

Fig. 1 is a view showing a state when a mold opening of an injection molding machine according to an embodiment is completed. Fig. 2 is a view showing a state when a mold of the injection molding machine according to the embodiment is clamped. In Figs. 1 and 2, an X direction, a Y direction, and a Z direction are directions which are perpendicular to each other. The X direction and the Y direction indicate a horizontal direction and the Z direction indicates a vertical direction. In a case where a mold clamping unit is a horizontal type clamping unit, the X direction is mold opening and closing directions, and the Y direction is a width direction of the injection molding machine . In Figs. 1 and 2, an intermediate mold support frame and an intermediate mold shown in Figs. 3 to 6 or the like are not shown. As shown in Figs. 1 and 2, the injection molding machine includes a mold clamping unit 100, an injection unit 300, a movement unit 400, a controller 700, and a frame Fr. Hereinafter, each component of the injection molding machine will be described.

### Mold Clamping Unit

In descriptions of the mold clamping unit 100, a movement direction (right direction in Figs. 1 and 2) of a movable platen 120 when a mold is closed is defined as a front side, and a movement direction (left direction in Figs. 1 and 2) of the movable platen 120 when the mold is open is defined as a rear side.

The mold clamping unit 100 performs closing, clamping, and opening on a mold unit 10. For example, the mold clamping unit 100 is a horizontal type clamping unit and mold opening and closing directions are a horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame Fr. A stationary mold 11 is attached to a surface of the stationary platen 110 facing the movable platen 120.

The movable platen 120 is movable in the mold opening and closing directions with respect to the frame Fr. A guide 101 which guides the movable platen 120 is placed on the frame Fr. A movable mold 12 is attached to a surface of the movable platen 120 facing the stationary platen 110.

The movable platen 120 is moved forward or rearward with respect to the stationary platen 110, and thus, closing, clamping, and opening of the mold are performed. The mold unit 10 is configured of the stationary mold 11 and the movable mold 12.

The toggle support 130 is connected to the stationary platen 110 with a gap therebetween, and is placed on the frame Fr to be movable in mold opening and closing directions . In addition, the toggle support 130 may be movable along a guide which is placed on the frame Fr. The guide of the toggle support 130 may be also used as the guide 101 of the movable platen 120.

In addition, in the present embodiment, the stationary platen 110 is fixed to the frame Fr, and the toggle support 130 is movable in the mold opening and closing directions with respect to the frame Fr. However, the toggle support 130 may be fixed to the frame Fr, and the stationary platen 110 may be movable in the mold opening and closing directions with respect to the frame Fr.

The stationary platen 110 and the toggle support 130 are connected to each other with a gap L in the mold opening and closing directions by the tie bar 140. A plurality of (for example, four) tie bars 140 may be used. The tie bars 140 are parallel in the mold opening and closing directions and extend according to a mold clamping force. A tie bar strain detector 141 which detects strain of the tie bar 140 may be provided in at least one tie bar 140. The tie bar strain detector 141 sends signals indicating the detection results to the controller 700. The detection results of the tie bar strain detector 141 are used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and the attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 is configured of a crosshead 151, a pair of link groups, or the like. Each link group includes a first link 152 and a second link 153 which are bendably/strechably connected to each other by pins or the like. The first link 152 is attached to the movable platen 120 so as to be oscillated by pins or the like and the second link 153 is attached to the toggle support 130 so as to be oscillated by pins or the like. The second link 153 is attached to the crosshead 151 via a third link 154. If the crosshead 151 is moved forward or rearward with respect to the toggle support 130, the first link 152 and the second link 153 are bent and stretched and the movable platen 120 is moved forward or rearward with respect to the toggle support 130.

In addition, the configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 is moved forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a mold clamping process, a mold opening process, or the like under the control of the controller 700.

In the mold closing process, the mold clamping motor 160 is driven to move the crosshead 151 forward to a mold closing completion position at a set speed. Accordingly, the movable platen 120 is moved forward. For example, a position or speed of the crosshead 151 is detected using a mold clamping motor encoder 161 or the like. The mold clamping motor encoder 161 detects the rotation of the mold clamping motor 160 and sends signals indicating the detection results to the controller 700. In addition, a crosshead position detector which detects a position of the crosshead 151 and the crosshead speed detector which detects a speed of the crosshead 151 are not limited to the mold clamping motor encoder 161, and a general one can be used. In addition, a movable platen position detector which detects a position of the movable platen 120 and a movable platen speed detector which detects a speed of the movable platen 120 are not limited to the mold clamping motor encoder 161, and general one can be used.

In the mold clamping process, the mold clamping motor 160 is further driven to further move the crosshead 151 forward from the mold closing completion position to a mold clamping position, and thus, a mold clamping force is generated. When the mold is clamped, a cavity space is formed inside the mold unit 10, and the cavity space is filled with a liquid molding material by the injection unit 300. A filled molding material is solidified, and thus, a molding product is obtained. A plurality of cavity spaces may be provided, and in this case, a plurality of molding products may be simultaneously obtained.

In the mold opening process, the mold clamping motor 160 is driven to move the crosshead 151 rearward to a mold opening completion position at a set speed. Accordingly, the movable platen 120 is moved rearward. Thereafter, the molding product is ejected from the mold unit 10.

Setting conditions in the mold closing process and the mold clamping process are collectively set as a series of setting conditions. For example, the speed or positions (including a mold closing/opening start position, a speed switching position, a mold closing completion position, and a mold clamping position) of the crosshead 151 and a mold clamping force in the mold closing process and the mold clamping process are collectively set as a series of setting conditions. The mold closing/opening start position, the speed switching position, the mold closing completion position, and the mold clamping position are arranged in this order from the rear side toward the front side, and indicate a start point or an end point of a section in which the speed is set. The speed is set for each section. One speed switching position may be set or a plurality of speed switching positions may be set. The speed switching position may not be set. Any one of the mold clamping position and the mold clamping force may be set.

In the mold opening process, the setting conditions may be similarly set. For example, the speed or the position (including a mold opening start position, a speed switching position, and a mold opening completion position) of the crosshead 151 in the mold opening process are collectively set as a series of setting conditions . The mold opening start position, the speed switching position, and the mold opening completion position are arranged in this order from the front side toward the rear side, and indicate a start point or an end point of a section in which the speed is set. The speed is set for each section. One speed switching position may be set or a plurality of speed switching positions may be set. The speed switching position may not be set. The mold opening start position and the mold clamping position may be the same as each other. In addition, the mold opening completion position and the mold closing/opening start position may be the same as each other.

In addition, instead of the speeds, the positions, or the like of the crosshead 151, a speed, a position, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 10 is changed by replacement of the mold unit 10, a temperature change of the mold unit 10, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 becomes a predetermined angle at the time of the mold closing completion.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is rotatably supported by the toggle support 130, and a mold space adjustment motor 183 which rotates the screw nut 182 screwed to the screw shaft 181.

The screw shaft 181 and the screw nut 182 are provided for each tie bar 140. A rotation of the mold space adjustment motor 183 may be transmitted to a plurality of screw nuts 182 via a rotation transmission portion 185. The plurality of screw nuts 182 can be synchronously rotated. In addition, it is possible to rotate the plurality of screw nuts 182 individually by changing a transmission path of the rotation transmission portion 185.

For example, the rotation transmission portion 185 is configured of a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotation transmission portion 185 may be configured of a belt, a pulley, or the like instead of the gear.

An operation of the mold space adjustment mechanism 180 is controlled by the controller 700. The controller 700 drives the mold space adjustment motor 183 to rotate the screw nut 182, and thus, the position of the toggle support 130 which rotatably holds the screw nut 182 with respect to the stationary platen 110 is adjusted, and the gap L between the stationary platen 110 and the toggle support 130 is adjusted.

In addition, in the present embodiment, the screw nut 182 is rotatably held with respect to the toggle support 130 and the tie bar 140 in which the screw shaft 181 is formed is fixed to the stationary platen 110. However, the present invention is not limited to this.

For example, the screw nut 182 may be rotatably held with respect to the stationary platen 110 and the tie bar 140 may be fixed to the toggle support 130. In this case, the gap L can be adjusted by rotating the screw nut 182.

Moreover, the screw nut 182 maybe fixed to the toggle support 130 and the tie bar 140 may be rotatably held with respect to the stationary platen 110. In this case, the gap L can be adjusted by rotating the tie bar 140.

Moreover, the screw nut 182 may be fixed to the stationary platen 110 and the tie bar 140 may be rotatably held with respect to the toggle support 130. In this case, the gap L can be adjusted by rotating the tie bar 140.

The gap L is detected using a mold space adjustment motor encoder 184. The mold space adjustment motor encoder 184 detects a rotation amount or a rotation direction of the mold space adjustment motor 183 and sends signals indicating the detection results to the controller 700. The detection results of the mold space adjustment motor encoder 184 are used to monitor or control the position of the toggle support 130 or the gap L. In addition, a toggle support position detector which detects the position of the toggle support 130 and a gap detector which detects the gap L are not limited to the mold space adjustment motor encoder 184, and a general one may be used.

The mold space adjustment mechanism 180 rotates one of the screw shaft 181 and the screw nut 182 which are screwed to each other to adjust the gap L. A plurality of mold space adjustment mechanisms 180 maybe used, and a plurality of mold space adjustment motors 183 may be used.

Moreover, in order to adjust the gap L, the mold space adjustment mechanism 180 of the present embodiment includes the screw shaft 181 formed on the tie bar 140 and the screw nut 182 screwed to the screw shaft 181. However, the present invention is not limited to this.

For example, the mold space adjustment mechanism 180 may include a tie bar temperature controller which controls the temperature of the tie bar 140. The tie bar temperature controller is attached to each tie bar 140 and controls the temperatures of the plurality of tie bars 140. The tie bar 140 is lengthened by heat expansion and the gap L increases as the temperature of the tie bar 140 increases. The temperatures of the plurality of tie bars 140 can be adjusted independently.

For example, the tie bar temperature controller includes a heating unit such as a heater and controls the temperature of the tie bar 140 by heating. The tie bar temperature controller may include a cooler such as a water cooling jacket and may control the temperature of the tie bar 140 by cooling. The tie bar temperature controller may include both the heating unit and the cooler.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions. The vertical type mold clamping unit includes a lower platen, an upper platen, a toggle support, tie bars, a toggle mechanism, a mold clamping motor, or the like. Any one of the lower platen and the upper platen is used as a stationary platen and the other is used as a movable platen. A lower mold is attached to the lower platen and an upper mold is attached to the upper platen. The lower mold and the upper mold configure the mold unit. The lower mold may be attached to the lower platen via a rotary table. The toggle support is disposed below the lower platen and is connected to the upper platen via the tie bar. The upper platen and the toggle support are connected to each other in mold opening and closing directions by the tie bar with a gap therebetween. The toggle mechanism is disposed between the toggle support and the lower platen and lifts or lowers the movable platen. The mold clamping motor operates the toggle mechanism. In a case where the mold clamping unit is a vertical mold clamping unit, in general, the number of the tie bars is three. In addition, the number of the tie bars is not particularly limited.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### Injection Unit

Unlike the descriptions of the mold clamping unit 100, in descriptions of the injection unit 300, a movement direction (left direction in Figs. 1 and 2) of a screw 330 during filling is referred to as a front side, and a movement direction (right direction in Figs. 1 and 2) of the screw 330 during plasticizing is referred to as a rear side.

The injection unit 300 is installed on a slide base 301 which is movable forward or rearward with respect to the frame Fr, and is movable forward or rearward with respect to the mold unit 10. The injection unit 300 comes into contact with the mold unit 10, and thus, the cavity space inside the mold unit 10 is filled with the molding material. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a supply port 311 to the inner portion of the cylinder 310. For example, the molding material includes a resin or the like. For example, the molding material is formed in a pellet shape and is supplied to the supply port 311 in a solid state. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 is provided on an outer periphery of the cylinder 310 on a front side of the cooler 312.

The cylinder 310 is divided into a plurality of zones in an axial direction (right and left directions in Figs. 1 and 2) of the cylinder 310. The heating unit 313 and the temperature detector 314 are provided in each zone. The controller 700 controls the heating unit 313 such that a detection temperature of the temperature detector 314 for each zone becomes a set temperature.

The nozzle 320 is provided on the front end portion of the cylinder 310 and presses the mold unit 10. The heating unit 313 and the temperature detector 314 are provided on an outer periphery of the nozzle 320. The controller 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along spiral grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 is moved rearward. Thereafter, if the screw 330 is moved forward, the liquid molding material accumulated in front of the screw 330 is injected from the nozzle 320 and the inside of the mold unit 10 is filled with the liquid molding material.

A backflow prevention ring 331 is attached to a front portion of the screw 330 to be movable forward or rearward as a backflow prevention valve which prevents a backflow of the molding material from the front side of the screw 330 toward the rear side when the screw 330 is pushed forward.

When the screw 330 is moved forward, the backflow prevention ring 331 is pushed toward the rear side by the pressure of the molding material in front of the screw 330 and is moved rearward relative to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the spiral grooves of the screw 330 and is moved forward relative to the screw 330 to an open position (refer to Fig. 1) at which the flow path of the molding material is open. Accordingly, the molding material is fed to the front side of the screw 330.

The backflow prevention ring 331 may be either a co-rotation type ring which rotates together with the screw 330 or a non-co-rotation type ring which does not rotate together with the screw 330.

In addition, the injection unit 300 may include a drive source which moves the backflow prevention ring 331 forward or rearward relative to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder or the like, for example.

The pressure detector 360 detects a pressure transmitted between the injection motor 350 and the screw 330. The pressure detector 360 is provided on a pressure transmission path between the injection motor 350 and the screw 330 and detects a pressure applied to the pressure detector 360.

The pressure detector 360 sends signals indicating the detection results to the controller 700. The detection results of the pressure detector 360 are used to control or monitor a pressure received by the screw 330 from the molding material, a back pressure with respect to the screw 330, a pressure applied from the screw 330 to the molding material, or the like.

The injection unit 300 performs a plasticizing process, a filling process, a holding pressure process, or the like under the control of the controller 700.

In the plasticizing process, the plasticizing motor 340 is driven to rotate the screw 330 at a set rotating speed and the molding material is fed forward along the spiral grooves of the screw 330 by the screw 330. According to this, the molding material is gradually melted. The screw 330 is moved rearward as the liquid molding material is fed to the front side of the screw 330 and is accumulated in front of the cylinder 310. For example, the rotating speed of the screw 330 is detected using a plasticizing motor encoder 341. The plasticizing motor encoder 341 detects the rotation of the plasticizing motor 340 and sends signals indicating the detection results to the controller 700. In addition, a screw rotating speed detector which detects the rotating speed of the screw 330 is not limited to the plasticizing motor encoder 341, and a general one can be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends signals indicating the detection results to the controller 700. If the screw 330 is moved rearward to a plasticizing completion position and a predetermined amount of the molding materials is accumulated in front of the screw 330, the plasticizing process is completed.

In the filling process, the injection motor 350 is driven to move the screw 330 forward at a set speed, and the cavity space inside the mold unit 10 is filled with the liquid molding material accumulated in front of the screw 330. For example, a position or speed of the screw 330 is detected using an injection motor encoder 351. The injection motor encoder 351 detects the rotation of the injection motor 350 and sends signals indicating the detection results to the controller 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

Moreover, in the filling process, after the position of the screw 330 reaches the set position, the screw 330 may temporarily stop at the set position, and thereafter, the V/P switching may be performed. Immediately before the V/P switching, instead of stopping the screw 330, the screw 330 may be moved forward or maybe moved rearward at a very slow speed. In addition, a screw position detector which detects the position of the screw 330 and a screw speed detector which detects the speed of the screw 330 are not limited to the injection motor encoder 351, and a general one can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 10. Insufficient molding materials can be replenished by cooling shrinkage in the mold unit 10. For example, the holding pressure is detected using the pressure detector 360. The pressure detector 360 sends signals indicating the detection results to the controller 700. A set value of the holding pressure may be changed according to an elapsed time from the starting of the holding pressure process, or the like.

In the holding pressure process, the molding material inside the cavity space in the mold unit 10 is gradually cooled, and when the holding pressure process is completed, an inlet of the cavity space is closed by the molding material which is solidified. This state is referred to as a gate seal, and a backflow of the molding material from the cavity space is prevented. After the holding pressure process, a cooling process starts. In the cooling process, solidification of the molding material in the cavity space is performed. In order to shorten a molding cycle time, the plasticizing process maybe performed during the cooling process.

In addition, the injection unit 300 of the present embodiment is an inline and screw type injection unit. However, the injection unit 300 may be a preplasticizing type injection unit. The preplasticizing type injection unit supplies molten molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### Movement Unit

Similarly to the descriptions of the injection unit 300, in descriptions of the movement unit 400, the movement direction (left direction in Figs. 1 and 2) of the screw 330 during filling is referred to as a front side, and the movement direction (right direction in Figs. 1 and 2) of the screw 330 during plasticizing is referred to as a rear side.

The movement unit 400 moves the injection unit 300 forward or rearward with respect to the mold unit 10. In addition, the movement unit 400 presses the nozzle 320 to the mold unit 10 to generate a nozzle touch pressure. The movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can be rotated in both directions and switches a rotation direction of the motor 420. Accordingly, a working liquid (for example, oil) is sucked from any one of first port 411 and the second port 412 and is discharged from the other, and thus, a liquid pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction and by rotation torque corresponding to the control signals from the controller 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 is moved forward, and thus, the nozzle 320 is pressed to the stationary mold 11. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 is moved rearward and thus, the nozzle 320 is moved away from the stationary mold 11.

In addition, in the present embodiment, the movement unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### Controller

For example, as shown in Figs. 1 and 2, the controller 700 is configured of a computer and includes a Central Processing Unit (CPU) 701, a recording medium 702 such as a memory, an input interface 703, and an output interface 704. The controller 700 performs various controls by causing the CPU 701 to execute a program stored in the recording medium 702. In addition, the controller 700 receives a signal from the outside through the input interface 703 and transmits a signal to the outside through the output interface 704.

The controller 700 repeatedly performs the mold closing process, the mold clamping process, the mold opening process, or the like to repeatedly manufacture the molding product. In addition, the controller 700 performs the plasticizing process, the filling process, the holding pressure process, or the like during the mold clamping process. A series of operations to obtain the molding product, for example, an operation from the start of the plasticizing process to the start of the next plasticizing process is referred to as "shot" or a "molding cycle" . In addition, a time required for once shot is also referred to as a "molding cycle time".

For example, a single molding cycle includes the plasticizing process, the mold closing process, the mold clamping process, the filling process, the holding pressure process, a cooling process, a mold opening process, and an ejection process in this order. Here, the order is the order of the start of each process. The filling process, holding pressure process, and cooling process are performed from the start of the mold clamping process to the end of the mold clamping process. The end of the mold clamping process coincides with the start of the mold opening process. In addition, in order to shorten the molding cycle time, a plurality of steps may be carried out at the same time. For example, the plasticizing process may be performed during the cooling process of the previous molding cycle, and in this case, the mold closing process may be performed at the beginning of the molding cycle. In addition, the filling process may start during the mold closing process. Moreover, the ejection process may start during the mold opening process. In the case where an on/off valve which opens and closes a flow path of the nozzle 320 is provided, the mold opening process may start during the plasticizing process. Even when the mold opening process starts during the plasticizing process, if the on/off valve closes the flow path of the nozzle 320, the molding material does not leak from the nozzle 320.

The controller 700 is connected to an operation unit 750 or the display unit 760. The operation unit 750 receives an input operation from a user and outputs signals corresponding to the input operation to the controller 700. The display unit 760 displays an operation screen corresponding to the input operation of the operation unit 750 under the control of the controller 700.

The operation screen is used for the setting of the injection molding machine or the like. A plurality of operation screens are provided, and thus, are displayed to be switched or to overlap each other. A user operates the operation unit 750 while viewing the operation screen displayed by the display unit 760 to perform the setting (including an input of a set value) of the injection molding machine or the like.

For example, the operation unit 750 and the display unit 760 may be configured of a touch panel to be integrated with each other. In addition, in the present embodiment, the operation unit 750 and the display unit 760 are integrated with each other. However, the operation unit 750 and the display unit 760 may be provided to be independent to each other. In addition, a plurality of operation units 750 may be provided.

### Injection Blow Molding

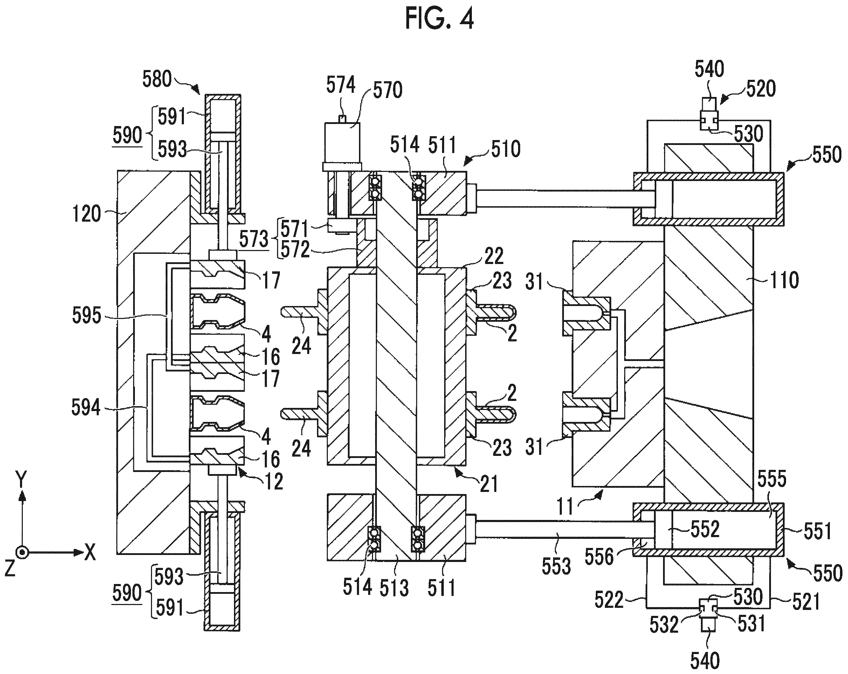

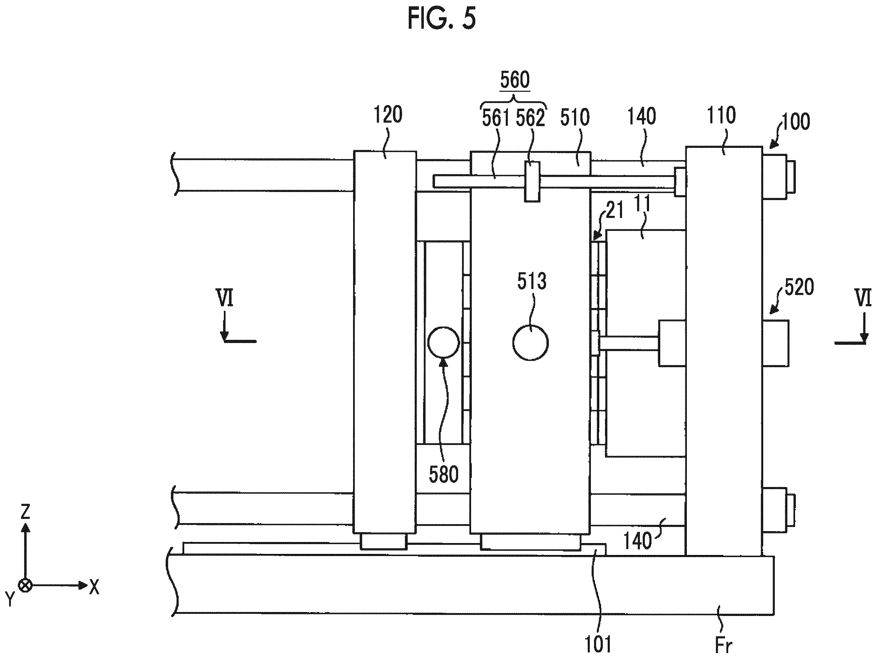

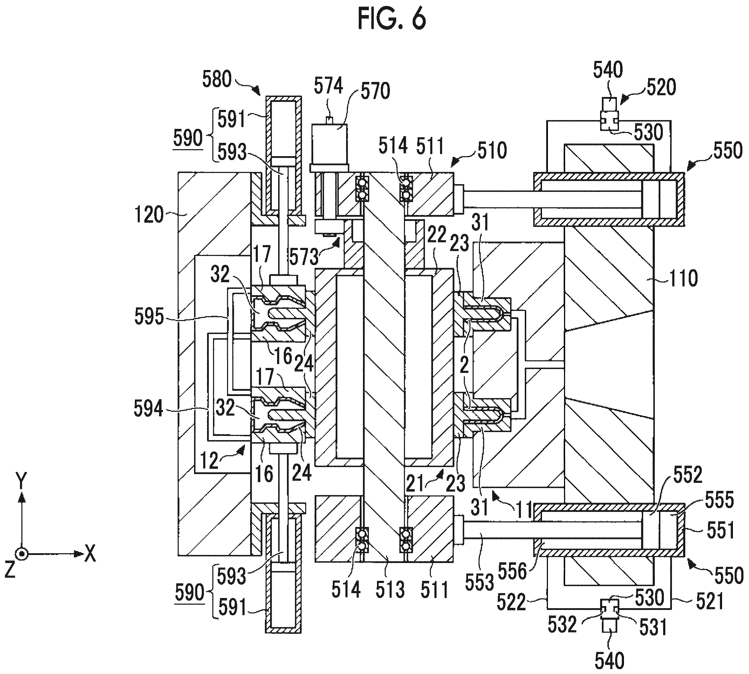

Fig. 3 is a view showing a state when a mold opening of the mold clamping unit according to the embodiment is completed. Fig. 4 is a sectional view taken along line IV-IV of Fig. 3. Fig. 5 is a view showing a state when a mold of the mold clamping unit according to the embodiment is clamped. Fig. 6 is a sectional view taken along line VI-VI of Fig. 5.

For example, the mold clamping unit 100 includes an intermediate mold support frame 510 which is disposed between the stationary platen 110 and the movable platen 120 and an intermediate mold movement unit 520 which moves the intermediate mold support frame 510 with respect to the stationary platen 110 so as to move an intermediate mold 21 supported by the intermediate mold support frame 510. In addition, the mold clamping unit 100 includes a mold rotating motor 570 which rotates the intermediate mold 21 supported by the intermediate mold support frame 510. Moreover, the mold clamping unit 100 includes a split mold opening/closing unit 580 which opens and closes a first split mold 16 and a second split mold 17 constituting the movable mold 12.

The stationary platen 110 may be fixed to the frame Fr. The stationary mold 11 is attached to a mold attachment surface of the stationary platen 110. As shown in Fig. 6, the stationary mold 11 includes a plurality of recessed mold portions 31 which form a cavity space for injection molding in cooperation with the intermediate mold 21. Six recessed mold portions 31 for injection molding are arranged in the Z direction to form rows, and two rows are arranged with a gap in the Y direction. In addition, the number of recessed mold portions 31 for injection molding is not particularly limited.

The movable platen 120 is movable forward or rearward along the guide 101 placed on the frame Fr. The movable mold 12 is attached to a mold attachment surface of the movable platen 120. For example, the movable mold 12 includes the first split mold 16 and the second split mold 17. As shown in Fig. 6, the first split mold 16 and the second split mold 17 include a plurality of recessed mold portions 32 which form a cavity space for blow molding in cooperation with the intermediate mold 21 in a closed state. Six recessed mold portions 32 for blow molding are arranged in the Z direction to form rows, each row is configured of a pair of first split mold 16 and second split mold 17, and two pairs of first split mold 16 and second split mold 17 are provided with a gap in the Y direction. The number of recessed mold portions 32 for blow molding is not particularly limited.

The intermediate mold support frame 510 is disposed between the stationary platen 110 and the movable platen 120 and is movable forward or rearward along the guide 101 independently of the movable platen 120. The intermediate mold support frame 510 rotatably supports the intermediate mold 21.

The intermediate mold support frame 510 is formed in a rectangular frame shape when viewed in the mold opening and closing directions. Through-holes which penetrate the intermediate mold support frame 510 in the X direction are formed at four corners of the intermediate mold support frame 510, and the tie bars 140 are inserted into the through-holes. The intermediate mold support frame 510 is movable forward or rearward along the tie bars 140.

The intermediate mold support frame 510 includes a pair of pillar portions 511, each of which extends in the Z direction, and a pair of beam portions which connects both end portions of the pair of pillar portions 511 in the Z direction to each other. Each of the pair of pillar portions 511 holds a bearing 514 which rotatably supports a rotary shaft 513 in a center portion in the Z direction. An axial direction of the rotary shaft 513 is the Y direction, the intermediate mold 21 is fixed to the rotary shaft 513, and the intermediate mold 21 is rotated together with the rotary shaft 513.

The intermediate mold 21 includes a plate-shaped portion 22 which is formed in a plate shape when viewed in the axial direction (when viewed in the Y direction) of the rotary shaft 513, a first protruding mold portion 23 which is provided on one principal surface of the plate-shaped portion 22, and a second protruding mold portions 24 which is provided on the remaining principal surface of the plate-shaped portion 22. The first protruding mold portions 23 and the second protruding mold portions 24 are disposed symmetrically in a state where the plate-shaped portion 22 is interposed therebetween. In the first protruding mold portions 23, the number of the recessed mold portions 31 for injection molding is the same as the number of the recessed mold portions 32 for blow molding. Similarly, the number of the second protruding mold portions 24 is the same as the number of the recessed mold portions 31 for injection molding or the number of the recessed mold portions 32 for blow molding.

When the first protruding mold portions 23 face the recessed mold portions 31 for injection molding, the second protruding mold portions 24 face the recessed mold portions 32 for blow molding. In addition, when the first protruding mold portions 23 face the recessed mold portions 32 for blow molding, the second protruding mold portions 24 face the recessed mold portions 31 for injection molding. Every time the intermediate mold 21 is rotated by 180°, the combination of the facing molds is changed.

Moreover, in the present embodiment, the protruding mold portions are provided in the intermediate mold 21 and the recessed mold portions are provided in the stationary mold 11 and the movable mold 12. However, the disposition of protruding mold portions and recessed mold portions may be reversed. That is, the protruding mold portions may be provided in the stationary mold 11 and the movable mold 12, and the recessed mold portions may be provided in the intermediate mold 21.

The intermediate mold movement unit 520 moves the intermediate mold support frame 510 in the X direction so as to move the intermediate mold 21 in the X direction. As shown in Figs. 4 and 6, the intermediate mold movement unit 520 includes an intermediate mold movement pump 530, an intermediate mold movement motor 540, an intermediate mold movement cylinder 550, or the like. Two sets of the intermediate mold movement pump 530, the intermediate mold movement motor 540, and the intermediate mold movement cylinder 550 are provided. In addition, the intermediate mold movement pump 530 and the intermediate mold movement motor 540 may be common to the two intermediate mold movement cylinders 550 or may be provided one by one.

The intermediate mold movement pump 530 has a first port 531 and a second port 532. The intermediate mold movement pump 530 is a pump which can be rotated in both directions, and switches a rotation direction of the intermediate mold movement motor 540 such that the working liquid (for example, oil) is sucked from one of the first port 531 and the second port 532 and is discharged from the other thereof so as to generate a liquid pressure. In addition, the intermediate mold movement pump 530 can draw the working liquid from a tank and discharge the working liquid from any one of the first port 531 and the second port 532.

The intermediate mold movement motor 540 operates the intermediate mold movement pump 530. The intermediate mold movement motor 540 drives the intermediate mold movement pump 530 in the rotation direction and by the rotation torque according to the control signal from the controller 700. The intermediate mold movement motor 540 may be an electric motor or may be an electric servomotor.

The intermediate mold movement cylinder 550 includes a cylinder body 551, a piston 552, and a piston rod 553. The piston rod 553 extends in the X direction from the cylinder body 551 and is fixed to the center portion of the pillar portion 511 of the intermediate mold support frame 510 in the Z direction at a tip portion of the piston rod 553. The cylinder body 551 is fixed to the stationary platen 110. The piston 552 partitions the inside of the cylinder body 551 into a front chamber 555 which is a first chamber and a rear chamber 556 which is a second chamber.

The front chamber 555 of the intermediate mold movement cylinder 550 is connected to the first port 531 of the intermediate mold movement pump 530 via a first flow path 521. The working liquid discharged from the first port 531 is supplied to the front chamber 555 via the first flow path 521, and thus, the intermediate mold support frame 510 is pushed backward. As a result, the intermediate mold support frame 510 moves rearward and the intermediate mold 21 is moved away from the stationary mold 11.

Meanwhile, the rear chamber 556 of the intermediate mold movement cylinder 550 is connected to the second port 532 of the intermediate mold movement pump 530 via a second flow path 522. The working liquid discharged from the second port 532 is supplied to the rear chamber 556 of the intermediate mold movement cylinder 550 via the second flow path 522, and thus, the intermediate mold support frame 510 is pushed forward. As a result, the intermediate mold support frame 510 moves forward and the intermediate mold 21 is pressed to the stationary mold 11.

For example, the position of the intermediate mold 21 in the X direction with respect to the stationary mold 11 is detected by a linear encoder 560 (refer to Figs. 3 and 5). The linear encoder 560 includes a linear scale 561 which extends in the X direction and a linear head 562 which detects a displacement amount with respect to the linear scale 561. The linear scale 561 is fixed to the stationary platen 110 at a front end of the linear scale 561 and the linear head 562 is fixed to the intermediate mold support frame 510. The arrangement of the linear scale 561 and the linear head 562 may be reversed. That is, the linear scale 561 may be fixed to the intermediate mold support frame 510 at a rear end thereof, and the linear head 562 may be fixed to the stationary platen 110. The linear head 562 sends signals indicating detection results to the controller 700.

In addition, in this embodiment, the intermediate mold movement unit 520 includes the intermediate mold movement cylinder 550. However, the present invention is not limited thereto. For example, instead of the intermediate mold movement cylinder 550, an electric motor and a motion conversion mechanism which converts a rotary motion of the electric motor into a linear motion of the intermediate mold support frame 510 may be used.

The mold rotating motor 570 rotates the intermediate mold 21 which is supported by the intermediate mold support frame 510. For example, the mold rotating motor 570 is provided in the pillar portion 511 of the intermediate mold support frame 510. A drive gear 571 provided on an output shaft of the mold rotating motor 570 and a driven gear 572 provided in the rotary shaft 513 are meshed with each other. The drive gear 571 and the driven gear 572 configure a speed reducer 573. The rotary motion of the mold rotating motor 570 is transmitted to the rotary shaft 513 via the speed reducer 573. In addition, the configuration of the speed reducer 573 is not particularly limited. In addition, the rotary motion of the mold rotating motor 570 may be transmitted to the rotary shaft 513 via a belt or a pulley.

A mold rotating motor encoder 574 functions as a rotation angle detector which detects a rotation angle of the intermediate mold 21. The mold rotating motor encoder 574 detects the rotation of the output shaft of the mold rotating motor 570 and sends signals indicating the detection results to the controller 700. The controller 700 performs a servo control of the mold rotating motor 570 such that a detection value of the rotation angle of the intermediate mold 21 becomes a predetermined rotation angle (for example, 0° or 180°). When the intermediate mold 21 is rotated by 180°, the output shaft of the mold rotating motor 570 may rotate more than 180°. The rotation angle of the intermediate mold 21 is obtained from the rotation angle of the output shaft of the mold rotating motor 570, the reduction ratio, or the like.

The split mold opening/closing unit 580 opens and close the first split mold 16 and the second split mold 17 constituting the movable mold 12. For example, the split mold opening/closing unit 580 includes a pair of liquid pressure cylinders 590 which is provided in the movable platen 120. The pair of liquid pressure cylinders 590 is the center portion of the movable platen 120 in the Z direction and is symmetrically disposed with a gap in the Y direction. The pair of liquid pressure cylinders 590 is provided so as to face each other.

Each liquid pressure cylinder 590 includes a cylinder body 591 which is fixed to the movable platen 120 and a piston rod 593 which extends in the Y direction from the cylinder body 591. A tip portion of one piston rod 593 is fixed to one of the plurality of first split molds 16 which are connected to each other by a first connection member 594. A tip portion of the other piston rod 593 is fixed to one of the plurality of second split molds 17 which are connected to each other by a second connection member 595. If each liquid pressure cylinder 590 is operated, the first split mold 16 and the second split mold 17 are opened and closed.

Next, an operation of the mold clamping unit 100 having the above-described configuration will be described. The mold clamping unit 100 performs the mold closing process, the mold clamping process, the mold opening process, a split mold opening/closing process, an intermediate mold rotating process, or the like under the control by the controller 700.

In the mold closing process, the mold clamping motor 160 is driven to move the crosshead 151 forward to the mold closing completion position at a set speed. Accordingly, the movable platen 120 is moved forward and moves the movable mold 12 close to the stationary mold 11. In this case, the intermediate mold movement unit 520 moves the intermediate mold support frame 510 forward and moves the intermediate mold 21 close to the stationary mold 11. The movable mold 12 comes into contact with the intermediate mold 21 and the intermediate mold 21 comes into contact with the stationary mold 11.

Subsequently, in the mold clamping process, the mold clamping motor 160 is further driven to move the crosshead 151 forward from the mold clamping completion position to the mold closing completion position, and thus, a mold clamping force is generated. In Fig. 6, the cavity space for injection molding is formed between the recessed mold portions 31 of the stationary mold 11 and the first protruding mold portions 23 of the intermediate mold 21. In addition, in Fig. 6, the cavity space for blow molding is formed between the recessed mold portions 32 of the movable mold 12 and the second protruding mold portions 24 of the intermediate mold 21.

The cavity space for injection molding is filled with the molding material, and a preform 2 is injection-molded in the cavity space. Meanwhile, in the cavity space for blow molding, the preform 2 which is injection-molded in the cavity space for injection molding in advance, is expanded by a pressure of a compressed air, and the molding product 4 is blow-molded. The compressed air expanding the preform 2 is injected from the intermediate mold 21, and thus, the blow-molded molding product 4 is separated from the intermediate mold 21. The injection molding of the preform 2 and the blow molding of the molding product 4 are simultaneously performed.

Subsequently, in the mold opening process, the mold clamping motor 160 is driven to move the crosshead 151 rearward to the mold opening completion position at a set speed. Accordingly, the movable platen 120 is moved rearward, and thus, the movable mold 12 is moved away from the stationary mold 11. In this case, the intermediate mold movement unit 520 moves the intermediate mold support frame 510 rearward, and thus, the intermediate mold 21 is moved away from the stationary mold 11. The movable mold 12 is moved away from the intermediate mold 21, and the intermediate mold 21 is moved away from the stationary mold 11. During this time, the intermediate mold 21 holds the preform 2 before the blow molding.

Subsequently, in the split mold opening/closing process, the split mold opening/closing unit 580 opens the first split mold 16 and the second split mold 17. Thereafter, if the molding product 4 is extracted from the inside of the movable mold 12, the split mold opening/closing unit 580 closes the first split mold 16 and the second split mold 17.

Subsequently, in the intermediate mold rotating process, the mold rotating motor 570 is driven to rotate the intermediate mold 21 by 180°. Accordingly, the recessed mold portions 31 for injection molding and the recessed mold portions 32 for blow molding face each other, and the combinations of the first protruding mold portions 23 and the second protruding mold portions 24 are changed. While the intermediate mold 21 is rotated by 180°, the intermediate mold 21 holds the preform 2 before blow molding.

In addition, the intermediate mold rotating process may be performed simultaneously with the split mold opening/closing process or may be performed before the split mold opening/closing process. The intermediate mold rotating process maybe performed at any time as long as it is performed after the mold opening process is completed and before the next mold closing process starts.

Thereafter, the controller 700 repeatedly performs the mold closing process, the mold clamping process, the mold opening process, the split mold opening/closing process, the intermediate mold rotating process, or the like.

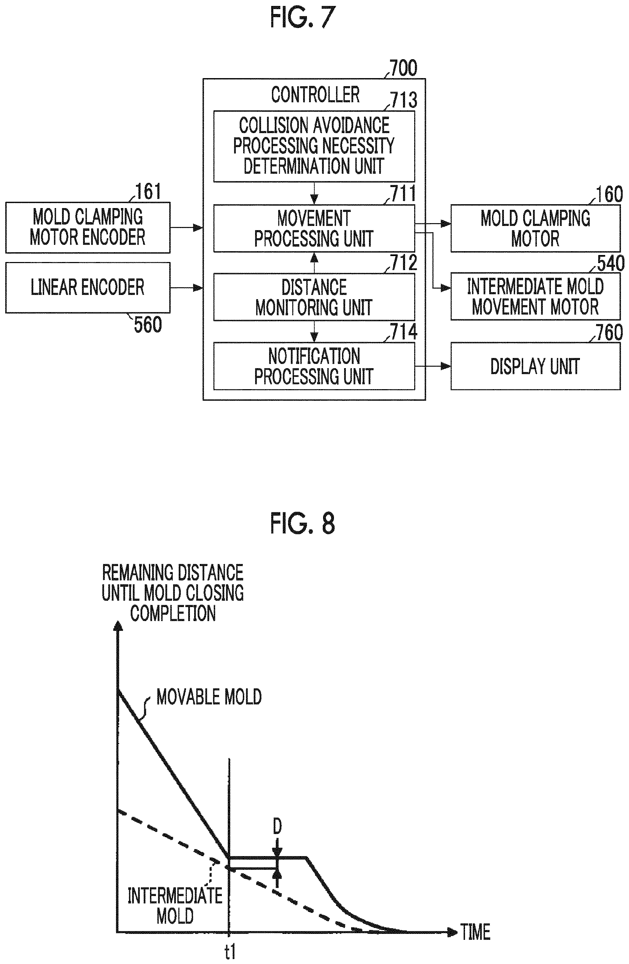

Fig. 7 is a functional block diagram showing components of a controller according to the embodiment. Functional blocks shown in Fig. 7 are conceptual and do not necessarily have to be physically configured as shown. All functional blocks or some functional blocks can be configured so as to be dispersed or integrated functionally or physically in any unit. All processing functions or some processing functions performed in the functional blocks can be realized by a program executed by a CPU or can be realized as hardware by wired logic.

For example, the controller 700 includes a movement processing unit 711 which controls a movement of the movable mold 12 and a movement of the intermediate mold 21 and a distance monitoring unit 712 which monitors a distance D (refer to Fig. 3) between the movable mold 12 and the intermediate mold 21 when the movable mold 12 and the intermediate mold 21 are moved in the same direction. Moreover, the distance monitoring unit 712 may monitor the distance D' (refer to Fig. 3) between the movable mold 12 and the intermediate mold 21, and a portion to be monitored is not particularly limited.

The movement processing unit 711 drives the mold clamping motor 160, which is a first drive unit which moves the movable mold 12 close to or away from the stationary mold 11, so as to the movable mold 12. In addition, the movement processing unit 711 drives the intermediate mold movement motor 540, which is a second drive unit which moves the intermediate mold 21 close to or away from the stationary mold 11, so as to move the intermediate mold 21. In the present embodiment, the movable mold 12 and the intermediate mold 21 are separately moved by different drive units. However, the movable mold 12 and the intermediate mold 21 may be moved by the same drive unit.

In the mold closing process, the movable mold 12 is moved close to the stationary mold 11 and the intermediate mold 21 is moved close to the stationary mold 11. In the mold closing process, the intermediate mold 21 precedes and the movable mold 12 follows the intermediate mold 21. That is, in the mold closing process, the intermediate mold 21 is a preceding mold and the movable mold 12 is a mold following the intermediate mold 21. Both the movable mold 12 and the intermediate mold 21 are moved at the same time, and thus, it is possible to shorten the molding cycle time.

Meanwhile, in the mold opening process, the movable mold 12 is moved away from the stationary mold 11 and the intermediate mold 21 is moved away from the stationary mold 11. In the mold opening process, the movable mold 12 precedes and the intermediate mold 21 follows the movable mold 12. That is, in the mold opening process, the movable mold 12 is a preceding mold and the intermediate mold 21 is a succeeding mold following the movable mold 12. Both the movable mold 12 and the intermediate mold 21 are moved at the same time, and thus, it is possible to shorten the molding cycle time.

The distance monitoring unit 712 monitors the distance D between the movable mold 12 and the intermediate mold 21 which move in the same direction. For example, the position of the movable mold 12 is obtained by detecting the position of the crosshead 151 by the mold clamping motor encoder 161 and converting the position of the crosshead 151 into the position of the movable mold 12. The position of the crosshead 151 and the position of the movable mold 12 correspond one-on-one. Data indicating the correspondence relationship is stored in the recording medium 702 in advance and read out as necessary. Meanwhile, the position of the intermediate mold 21 is detected by the linear encoder 560.

The distance monitoring unit 712 monitors the distance D between the movable mold 12 and the intermediate mold 21 by detecting the position of the movable mold 12 with respect to the stationary mold 11 and the position of the intermediate mold 21 with respect to the stationary mold 11 using the position detectors. However, the present invention is not limited thereto. For example, the distance monitoring unit 712 may monitor the distance D between the movable mold 12 and the intermediate mold 21 by measuring a change in the position of the intermediate mold 21 with respect to the movable mold 12 using a laser displacement meter or the like. The interval detector which detects the distance D is not limited to the laser displacement meter. For example, in the present embodiment, the linear encoder 560 is bridged between the intermediate mold support frame 510 and the stationary platen 110. However, the distance D can be detected as long as the linear encoder is bridged between the intermediate mold support frame 510 and the movable platen 120.

The distance monitoring unit 712 may detect only one of the position of the movable mold 12 and the position of the intermediate mold by the position detector so as to estimate the distance D between the movable mold 12 and the intermediate mold 21 and monitor the estimated distance D.

For example, the distance monitoring unit 712 may detect the position of the movable mold 12 by a movable mold position detector (for example, the mold clamping motor encoder 161), may estimate the distance D between the movable mold 12 and the intermediate mold 21 based on a difference between a detection position and a set position of the movable mold 12, and may monitor the estimated distance D. In this estimation, it is assumed that the position of the intermediate mold 21 is displaced as preset.

Similarly, the distance monitoring unit 712 may detect the position of the intermediate mold 21 by an intermediate mold position detector (for example, the linear encoder 560), may estimate the distance D between the intermediate mold 21 and the movable mold 12 based on a difference between a detection position and a set position of the intermediate mold 21, and may monitor the estimated distance D. In this estimation, it is assumed that the position of the movable mold 12 is displaced as preset.

In a case where the distance D monitored by the distance monitoring unit 712 is equal to or less than a predetermined value D0, the movement processing unit 711 changes a relative speed between the movable mold 12 and the intermediate mold 21 which move in the same direction such that a collision between the movable mold 12 and the intermediate mold 21 is avoid. Hereinafter, this change is referred to as a "collision avoidance processing".

For example, in the case the distance D monitored by the distance monitoring unit 712 is equal to or less than the predetermined value D0, the movement processing unit 711 change the relative speed between the movable mold 12 and the intermediate mold 21 moving in the same direction so as to decrease a speed at which the distance D decreases, compared to a case where the distance D is equal to or more than the predetermined value D0.

In addition, in the case the distance D monitored by the distance monitoring unit 712 is equal to or less than the predetermined value D0, the movement processing unit 711 may change the relative speed between the movable mold 12 and the intermediate mold 21 moving in the same direction so as to increase the distance D or to maintain the distance D.

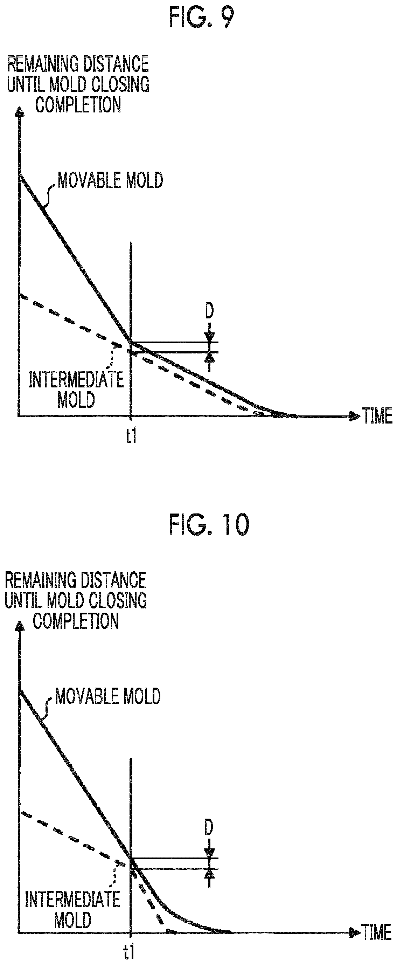

Fig. 8 is a graph showing an example of the movement of the movable mold and the movement of the intermediate mold in the mold closing process. Fig. 9 is a graph showing another example of the movement of the movable mold and the movement of the intermediate mold in the mold closing process. Fig. 10 is a graph showing still another example of the movement of the movable mold and the movement of the intermediate mold in the mold closing process. In Figs. 8 to 10, a transition of the detection position of the movable mold 12 and a transition of the detection position of the intermediate mold 21 are shown.

In Figs. 8 to 10, according to the start of the mold closing process, the forward movements of both the movable mold 12 and the intermediate mold 21 start at substantially the same time. A forward movement speed of the movable mold 12 is greater than a forward movement of the intermediate mold 21, and thus, the distance D between the movable mold 12 and the intermediate mold 21 gradually decreases. The distance D becomes equal to or less than the predetermined value D0 at a time t1.

In Fig. 8, if the distance D becomes equal to or less than the predetermined value D0 at the time t1, the movement processing unit 711 stops the forward movement of the succeeding movable mold 12. As a result, the distance D can increase, and a collision can be reliably avoided. If the distance D becomes equal to or more than a predetermined value (> D0), the forward movement of the movable mold 12 may be restarted.

In Fig. 9, if the distance D becomes equal to or less than the predetermined value D0 at the time t1, the movement processing unit 711 decreases the forward movement speed of the succeeding movable mold 12. Decreasing the forward movement speed involves setting the forward movement speed to zero so as to stop the forward movement.

The forward movement speed of the movable mold 12 after the change is set smaller than the forward movement speed of the movable mold 12 before the change. As a result, the speed at which the distance D decreases can be reduced. The mold closing process may be completed until a collision time of the movable mold 12 and the intermediate mold 21 which is predicted from the speed at which the distance D decreases.

Preferably, the forward movement speed of the movable mold 12 after the change is set to be equal to or less than the forward movement speed of the intermediate mold 21. In a case where the forward movement speed of the movable mold 12 after the change is the same as the forward movement speed of the intermediate mold 21, the distance D can be maintained and the collision can be reliably avoided. Meanwhile, in a case where the forward movement speed of the movable mold 12 after the change is smaller than the forward movement speed of the intermediate mold 21, the distance D can increases and the collision can be reliably avoided.

In Fig. 10, if the distance D becomes equal to or less than the predetermined value D0 at the time t1, the movement processing unit 711 increases the forward movement speed of the preceding intermediate mold 21.

The forward movement speed of the intermediate mold 21 after the change is set to be larger than the forward movement speed of the intermediate mold 21 before the change. As a result, the speed at which the distance D decreases can be reduced. The mold closing process may be completed until a collision time of the movable mold 12 and the intermediate mold 21 which is predicted from the speed at which the distance D decreases.

Preferably, the forward movement speed of the intermediate mold 21 after the change is set to be equal to or more than the forward movement speed of the movable mold 12. In a case where the forward movement speed of the intermediate mold 21 after the change is the same as the forward movement speed of the movable mold 12, the distance D can be maintained and the collision can be reliably avoided. Meanwhile, in a case where the forward movement speed of the intermediate mold 21 after the change is larger than the forward movement speed of the movable mold 12, the distance D can increases and the collision can be reliably avoided.

Moreover, in Figs. 8 to 10, the forward movement speed of any one of the movable mold 12 and the intermediate mold 21 is changed in order to change the relative speed between the movable mold 12 and the intermediate mold 21 which move in the same direction. However, the forward movement speeds of both the movable mold 12 and the intermediate mold 21 may be changed.

Meanwhile, as shown in Figs. 8 to 10, in a final stage of the mold closing process, the distance D between the movable mold 12 and the intermediate mold 21 which move in the same direction may be equal to or less than the predetermined value D0. If the distance D is maintained to be equal to or more than the predetermined value D0 even at the final stage of the mold closing process, a time difference from the end of the movement of the preceding intermediate mold 21 to the end of the movement of the succeeding movable mold 12 increases, and the molding cycle time is lengthened.

Accordingly, the controller 700 includes a collision avoidance processing necessity determination unit 713 which determines necessity of the collision avoidance processing by the movement processing unit 711. The movement processing unit 711 performs the collision avoidance processing in a case where the collision avoidance processing necessity determination unit 713 determines that the collision avoidance processing is necessary and does not perform the collision avoidance processing in a case where the collision avoidance processing necessity determination unit 713 determines that collision avoidance processing is unnecessary. Accordingly, it is possible to allow the distance D to fall below the predetermined value D0 at the final stage of the mold closing process, it is possible to decrease the time difference from the end of the movement of the preceding intermediate mold 21 to the end of the movement of the succeeding movable mold 12, and it is possible to shorten the molding cycle time.

For example, the collision avoidance processing necessity determination unit 713 determines the necessity of the collision avoidance processing, based on at least one of the position and the forward movement speed of the movable mold 12 and the position and the forward movement speed of the intermediate mold 21.

Accordingly, in the mold closing process, in a case where the position of the movable mold 12 is within a predetermined distance from the mold closing completion position, the stage of the mold closing process reaches the final stage, and thus, it is determined that the collision avoidance processing is unnecessary. In the mold closing process, in the case where the position of the movable mold 12 is within the predetermined distance from the mold closing completion position, the movable mold 12 is decelerated and the forward movement speed of the movable mold 12 becomes equal to or less than a predetermined value. Accordingly, if the forward movement speed of the movable mold 12 is equal to or less than the predetermined value, it may be determined that the collision avoidance processing is unnecessary. Meanwhile, in the mold closing process, in a case where the position of the movable mold 12 is moved away from the mold closing completion position to exceed the predetermined distance from the mold closing completion position, the stage of the mold closing process does not reach the final stage, and thus, it is determined that the collision avoidance processing is necessary.

Similarly, in the mold closing process, in a case where the position of the intermediate mold 21 is within a predetermined distance from the mold closing completion position, the stage of the mold closing process reaches the final stage, and thus, it is determined that the collision avoidance processing is unnecessary. In the mold closing process, in the case where the position of the intermediate mold 21 is within the predetermined distance from the mold closing completion position, the intermediate mold 21 is decelerated and the forward movement speed of the intermediate mold 21 becomes equal to or less than a predetermined value. Accordingly, if the forward movement speed of the intermediate mold 21 is equal to or less than the predetermined value, it may be determined that the collision avoidance processing is unnecessary. Meanwhile, in the mold closing process, in a case where the position of the intermediate mold 21 is moved away from the mold closing completion position to exceed the predetermined distance from the mold closing completion position, since the stage of the mold closing process does not reach the final stage, it is determined that the collision avoidance processing is necessary.

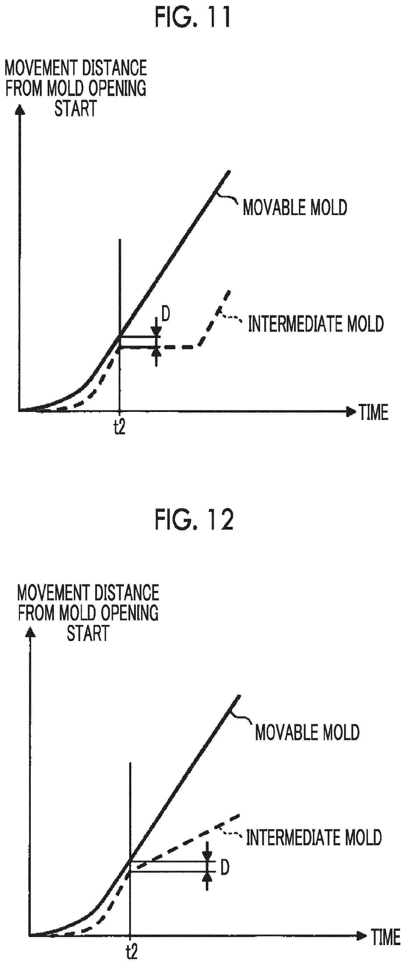

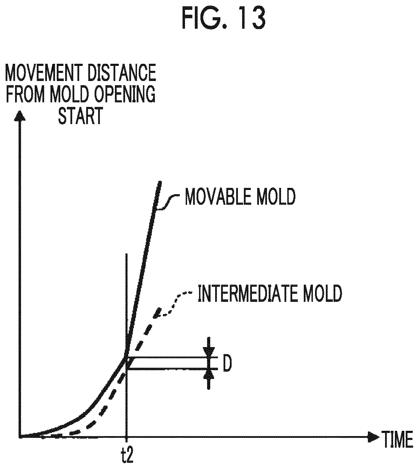

Fig. 11 is a graph showing an example of the movement of the movable mold and the movement of the intermediate mold in the mold opening process. Fig. 12 is a graph showing another example of the movement of the movable mold and the movement of the intermediate mold in the mold opening process. Fig. 13 is a graph showing still another example of the movement of the movable mold and the movement of the intermediate mold in the mold opening process. In Figs. 11 to 13, the transition of the detection position of the movable mold 12 and the transition of the detection position of the intermediate mold 21 are shown.

In Figs. 11 to 13, according to the start of the mold opening process, a rearward movement of the movable mold 12 starts. The intermediate mold 21 may start the rearward movement slightly later than the movable mold 12. If a rearward movement speed of the intermediate mold 21 is greater than a rearward movement speed of the movable mold 12, the distance D between the movable mold 12 and the intermediate mold 21 gradually decreases. The distance D becomes equal to or less than the predetermined value D0 at a time t2.

In Fig. 11, if the distance D becomes equal to or less than the predetermined value D0 at the time t2, the movement processing unit 711 stops the rearward movement of the succeeding intermediate mold 21. As a result, the distance D can increase, and a collision can be reliably avoided. If the distance D becomes equal to or more than a predetermined value (> D0), the rearward movement of the intermediate mold 21 may be restarted.

In Fig. 12, if the distance D becomes equal to or less than the predetermined value D0 at the time t2, the movement processing unit 711 decreases the rearward movement speed of the succeeding intermediate mold 21. Decreasing the rearward movement speed involves setting the rearward movement speed to zero so as to stop the rearward movement.

The rearward movement speed of the intermediate mold 21 after the change is set smaller than the rearward movement speed of the intermediate mold 21 before the change. As a result, the speed at which the distance D decreases can be reduced. The mold opening process may be completed until the collision time of the movable mold 12 and the intermediate mold 21 which is predicted from the speed at which the distance D decreases.

Preferably, the rearward movement speed of the intermediate mold 21 after the change is set to be equal to or less than the rearward movement speed of the movable mold 12. In a case where the rearward movement speed of the intermediate mold 21 after the change is the same as the rearward movement speed of the movable mold 12, the distance D can be maintained and the collision can be reliably avoided. Meanwhile, in a case where the rearward movement speed of the intermediate mold 21 after the change is smaller than the rearward movement speed of the movable mold 12, the distance D can increase and the collision can be reliably avoided.

In Fig. 13, if the distance D becomes equal to or less than the predetermined value D0 at the time t2, the movement processing unit 711 increases the rearward movement speed of the preceding movable mold 12.

The rearward movement speed of the movable mold 12 after the change is set to be larger than the rearward movement speed of the movable mold 12 before the change. As a result, the speed at which the distance D decreases can be reduced. The mold opening process maybe completed until a collision time of the intermediate mold 21 and the movable mold 12 which is predicted from the speed at which the distance D decreases.

Preferably, the rearward movement speed of the movable mold 12 after the change is set to be equal to or more than the rearward movement speed of the intermediate mold 21. In a case where the rearward movement speed of the movable mold 12 after the change is the same as the rearward movement speed of the intermediate mold 21, the distance D can be maintained and the collision can be reliably avoided. Meanwhile, in a case where the rearward movement speed of the movable mold 12 is larger than the rearward movement speed of the intermediate mold 21, the distance D can increase and the collision can be reliably avoided.

Moreover, in Figs. 11 to 13, the rearward movement speed of any one of the intermediate mold 21 and the movable mold 12 is changed in order to change the relative speed between the movable mold 12 and the intermediate mold 21 which move in the same direction. However, the rearward movement speeds of both the intermediate mold 21 and the movable mold 12 may be changed.

Meanwhile, as shown in Figs. 11 to 13, in an initial stage of the mold opening process, the distance D between the intermediate mold 21 and the movable mold 12 which move in the same direction may be equal to or less than the predetermined value D0. If the distance D is maintained to be equal to or more than the predetermined value D0 even at the initial stage of the mold opening process, a time difference from the start of the movement of the preceding movable mold 12 to the start of the movement of the succeeding intermediate mold 21 increases, and the molding cycle time is lengthened.

Accordingly, similarly to the mold closing process, even in the mold opening process, the collision avoidance processing necessity determination unit 713 determines necessity of the collision avoidance processing by the movement processing unit 711. The movement processing unit 711 performs the collision avoidance processing in the case where the collision avoidance processing necessity determination unit 713 determines that the collision avoidance processing is necessary and does not perform the collision avoidance processing in a case where the collision avoidance processing necessity determination unit 713 determines that collision avoidance processing is unnecessary. Accordingly, it is possible to allow the distance D to fall below the predetermined value D0 at the initial stage of the mold opening process, it is possible to decrease the time difference from the start of the movement of the preceding movable mold 12 to the start of the movement of the succeeding intermediate mold 21, and it is possible to shorten the molding cycle time.

For example, the collision avoidance processing necessity determination unit 713 determines the necessity of the collision avoidance processing, based on at least one of the position and the rearward movement speed of the movable mold 12 and the position and the rearward movement speed of the intermediate mold 21. For example, the position or the rearward movement speed of the movable mold 12 is detected by the mold clamping motor encoder 161. In addition, the position or the rearward movement speed of the intermediate mold 21 is detected by the linear encoder 560.

Accordingly, in the mold opening process, in a case where the position of the movable mold 12 is within a predetermined distance from the mold opening start position, the stage of the mold opening process is the initial stage, and thus, it is determined that the collision avoidance processing is unnecessary. In the mold opening process, in the case where the position of the movable mold 12 is within the predetermined distance from the mold opening start position, since the movable mold 12 is decelerated, the rearward movement speed of the movable mold 12 does not reach a predetermined value. Accordingly, if the rearward movement speed of the movable mold 12 is equal to or less than the predetermined value, it may be determined that the collision avoidance processing is unnecessary. Meanwhile, in the mold opening process, in a case where the position of the movable mold 12 is moved away from the mold opening start position to exceed the predetermined distance from the mold opening start position, the stage of the mold closing process passes through the final stage, and thus, it is determined that the collision avoidance processing is necessary.

Similarly, in the mold opening process, in a case where the position of the intermediate mold 21 is within the predetermined distance from the mold opening start position, the stage of the mold opening process is the initial stage, and thus, it is determined that the collision avoidance processing is unnecessary. In the mold opening process, in the case where the position of the intermediate mold 21 is within the predetermined distance from the mold opening start position, since the intermediate mold 21 is decelerated, the rearward movement speed of the intermediate mold 21 does not reach a predetermined value. Accordingly, if the rearward movement speed of the intermediate mold 21 is equal to or less than the predetermined value, it may be determined that the collision avoidance processing is unnecessary. Meanwhile, in the mold opening process, in a case where the position of the intermediate mold 21 is moved away from the mold opening start position to exceed the predetermined distance from the mold opening start position, the stage of the mold closing process passes through the initial stage, and thus, it is determined that the collision avoidance processing is necessary.

The controller 700 may include a notification processing unit 714 for notifying the monitoring result of the distance monitoring unit 712. The notification processing unit 714 may notify the position of the movable mold 12 and the position of the intermediate mold 21, in addition to the distance D between the movable mold 12 and the intermediate mold 21. The notifications are performed in the form of images, sounds, or the like, and the display unit 760, the warning lamp, the buzzer, or the like is used as the notification unit. It is possible to a user' convenience.

In a case the distance D is equal to or less than the predetermined value D0, the notification processing unit 714 may notify an alarm. A user's attention can be aroused by the notification of the alarm, the user can be urged to change settings relating to the mold closing process or the mold opening process, and thus, the collision between the movable mold 12 and the intermediate mold 21 can be avoided. A plurality of types of alarms may be prepared.

### Modification and Improvement

Hereinafter, the embodiment or the like of the injection molding machine is described. However, the present invention is not limited to the above-described embodiment and various modifications and improvements can be applied to the present invention within the scope of the invention defined in the appended claims.

For example, in the above embodiment, the intermediate mold 21 rotates about the rotary shaft 513 whose axial direction is the Y direction. However the intermediate mold 21 may rotate around a rotary shaft whose axial direction is the Z direction. In addition, the intermediate mold 21 may be non-rotatable. Any configuration may be adopted as long as the intermediate mold 21 and the movable mold 12 are moved in the X direction.

The controller 700 of the above-described embodiment includes the distance monitoring unit 712. However, the controller 700 may not include the distance monitoring unit 712. When both the movable mold 12 and the intermediate mold 21 are moved in the same direction, if the movement processing unit 711 controls the position of the other of the movable mold 12 and the intermediate mold 21 based on the position of one of the movable mold 12 and the intermediate mold 21, it is possible to avoid the collision between the movable mold 12 and the intermediate mold 21.

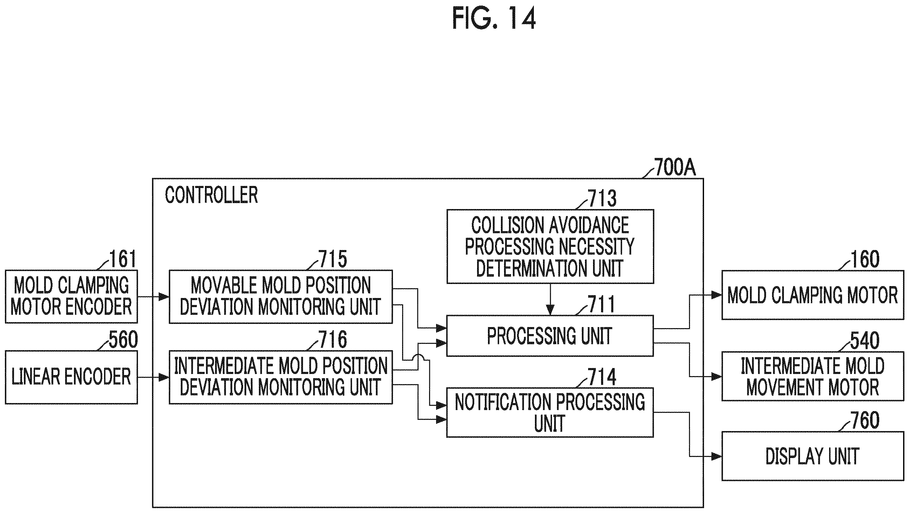

Fig. 14 is a functional block diagram showing components of a controller according to a modification example. Similarly to the controller 700 shown in Fig. 7, the controller 700A of the modification example includes the movement processing unit 711. The movement processing unit 711 performs the movement of the movable mold 12, the movement of the intermediate mold 21, and the collision avoidance between the movable mold 12 and the intermediate mold 21. Unlike the controller 700 shown in Fig. 7, the controller 700A of the present modification example does not include the distance monitoring unit 712 shown in Fig. 7.

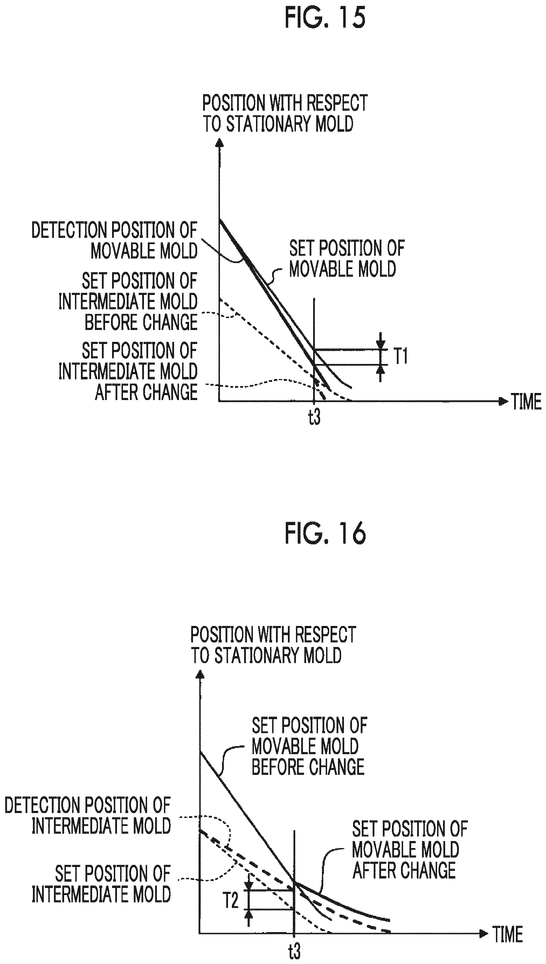

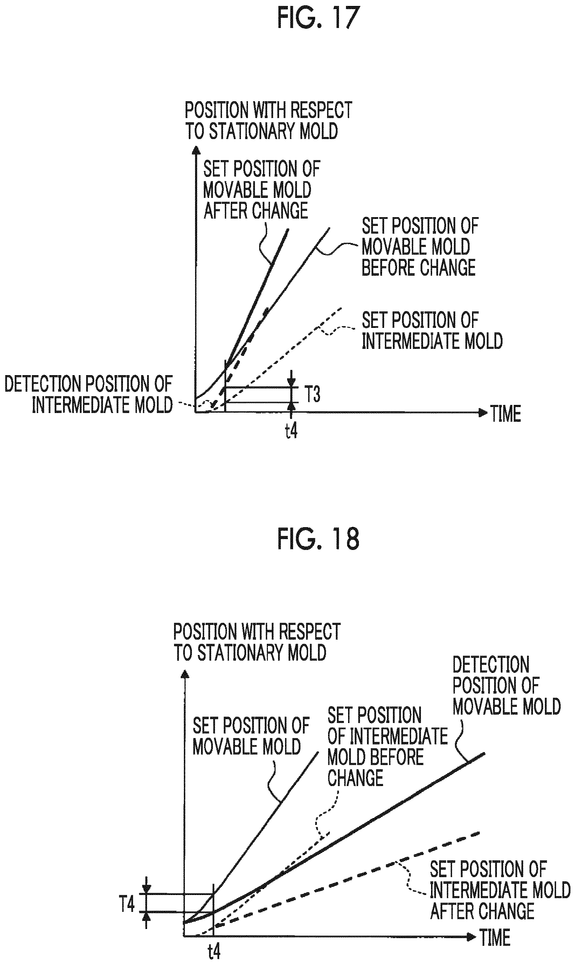

The controller 700A includes a movable mold position deviation monitoring unit 715 which monitors a deviation between the detection position and the set position of the movable mold 12. As will be described in detail later, as shown in Figs. 15 and 18, the movement processing unit 711 controls the position of the intermediate mold 21 based on the monitoring result of the movable mold position deviation monitoring unit 715,. Controlling the position of the intermediate mold 21 includes controlling the speed of the intermediate mold 21. In addition, the controller 700A includes an intermediate mold position deviation monitoring unit 716 which monitors a deviation between the detection position and the set position of the intermediate mold 21. As will be described in detail later, as shown in Figs. 16 and 17, the movement processing unit 711 controls the position of the movable mold 12 based on the monitoring result of the intermediate mold position deviation monitoring unit 716. Controlling the position of the movable mold 12 includes controlling the speed of the movable mold 12.

Fig. 15 is a graph showing an example of processing by the movement processing unit, based on the monitoring result of the movable mold position deviation monitoring unit in the mold closing process. The movement processing unit 711 controls the intermediate mold movement motor 540 such that the detection position of the intermediate mold 21 which is the preceding mold becomes the set position. At a time t3 of the mold closing process, in a case where the detection position of the movable mold 12, which is the succeeding mold, is faster by a threshold value T1 or more than the set position, the movement processing unit 711 changes the set position of the intermediate mold 21 so as to accelerate the intermediate mold 21 which is the preceding mold. The movement processing unit 711 controls the intermediate mold movement motor 540 such that the detection position of the intermediate mold 21 becomes the set position after the change. Accordingly, it is possible to avoid the collision between the intermediate mold 21 and the movable mold 12.

Fig. 16 is a graph showing an example of processing by the movement processing unit, based on the monitoring result of the intermediate mold position deviation monitoring unit in the mold closing process. The movement processing unit 711 controls the mold clamping motor 160 such that the detection position of the movable mold 12 which is the succeeding mold becomes the set position. At the time t3 of the mold closing process, in a case where the detection position of the intermediate mold 21, which is the preceding mold, is later by a threshold value T2 or more than the set position, the movement processing unit 711 changes the set position of the movable mold 12 so as to decelerate the movable mold 12 which is the succeeding mold. The movement processing unit 711 controls the mold clamping motor 160 such that the detection position of the movable mold 12 becomes the set position after the change. Accordingly, it is possible to avoid the collision between the movable mold 12 and the intermediate mold 21.

Fig. 17 is a graph showing an example of processing by the movement processing unit, based on the monitoring result of the intermediate mold position deviation monitoring unit in the mold opening process. The movement processing unit 711 controls the mold clamping motor 160 such that the detection position of the movable mold 12 which is the preceding mold becomes the set position. At a time t4 of the mold opening process, in a case where the detection position of the intermediate mold 21, which is the succeeding mold, is faster by a threshold value T3 or more than the set position, the movement processing unit 711 changes the set position of the movable mold 12 so as to accelerate the movable mold 12 which is the preceding mold. The movement processing unit 711 controls the mold clamping motor 160 such that the detection position of the movable mold 12 becomes the set position after the change. Accordingly, it is possible to avoid the collision between the movable mold 12 and the intermediate mold 21.

Fig. 18 is a graph showing an example of processing by the movement processing unit, based on the monitoring result of the movable mold position deviation monitoring unit in the mold opening process. The movement processing unit 711 controls the intermediate mold movement motor 540 such that the detection position of the intermediate mold 21 which is the succeeding mold becomes the set position. At a time t4 of the mold opening process, in a case where the detection position of the movable mold 12, which is the preceding mold, is later by a threshold value T4 or more than the set position, the movement processing unit 711 changes the set position of the intermediate mold 21 so as to decelerate the intermediate mold 21 which is the succeeding mold. The movement processing unit 711 controls the intermediate mold movement motor 540 such that the detection position of the intermediate mold 21 becomes the set position after the change. Accordingly, it is possible to avoid the collision between the intermediate mold 21 and the movable mold 12.

In addition, any one of the movable mold position deviation monitoring unit 715 and the intermediate mold position deviation monitoring unit 716 shown in Fig. 14 may be used. In addition, the movable mold position deviation monitoring unit 715 and/or the intermediate mold position deviation monitoring unit 716 shown in Fig. 14 and the distance monitoring unit 712 shown in Fig. 7 may be used in combination.

As shown in Fig. 14, the controller 700A may include the notification processing unit 714 for notifying the monitoring result of the movable mold position deviation monitoring unit 715 and the monitoring result of the intermediate mold position deviation monitoring unit 716. The notifications are performed in the form of images, sounds, or the like, and the display unit 760, the warning lamp, the buzzer, or the like is used as the notification unit. It is possible to a user' convenience

In a case where the deviation between the detection position and the set position of the movable mold 12 is out of a preset allowable range, there is a concern that abnormality may occur in the mold clamping motor 160, and thus, the notification processing unit 714 may issue the alarm. In addition, in a case where the deviation between the detection position and the set position of the intermediate mold 21 is out of the preset allowable range, there is a concern that abnormality may occur in the intermediate mold movement motor 540, and thus, the notification processing unit 714 may issue the alarm. The user's attention can be aroused by the notification of the alarm.

### Brief Description of the Reference Symbols

10: mold unit
11: stationary mold
12: movable mold
21: intermediate mold
100: mold clamping unit
110: stationary platen
120: movable platen
160: mold clamping motor
161: mold clamping motor encoder
510: intermediate mold support frame
540: intermediate mold movement motor
560: linear encoder
700, 700A: controller
711: movement processing unit
712: distance monitoring unit
713: collision avoidance processing necessity determination unit
714: notification processing unit
715: movable mold position deviation monitoring unit
716: intermediate mold position deviation monitoring unit

## Claims

1. An injection molding machine, comprising:
a drive unit (160, 540) which is configured to move a movable mold (12) close to or away from a stationary mold (11) and to move an intermediate mold (21) disposed between the movable mold (12) and the stationary mold (11) close to or away from the stationary mold (11);
a movement processing unit (711) which is configured to control a movement of the movable mold (12) and a movement of the intermediate mold (21);
a distance monitoring unit (712) which is configured to monitor a distance between the movable mold (12) and the intermediate mold (21) when both the movable mold (12) and the intermediate mold (21) are moved in the same direction,
wherein the movement processing unit (711) is configured to execute a collision avoidance processing when both the movable mold (12) and the intermediate mold (21) are moved in the same direction such that a collision between the molds is avoided,
**characterized in that**
said collision avoidance processing is based on the monitored distance between the movable mold (12) and the intermediate mold (21);
the injection molding machine includes a collision avoidance processing necessity determination unit (713) which determines necessity of the collision avoidance processing by the movement processing unit (711) and which is configured to determine that the collision avoidance processing is unnecessary if the stage of the mold closing process reaches the final stage and/or if the stage of the mold opening process reaches the initial stage.

2. The injection molding machine according to claim 1,
wherein in a case where the distance monitored by the distance monitoring unit (712) is equal to or less than a predetermined value, the movement processing unit (711) is configured to change a relative speed between the movable mold (12) and the intermediate mold (21) which move in the same direction such that a collision between the movable mold (12) and the intermediate mold (21) is avoided.

3. The injection molding machine according to claim 1 or 2,
wherein in a case where the distance monitored by the distance monitoring unit (712) is equal to or less than a predetermined value, the movement processing unit (711) is configured to decrease a movement speed of a succeeding mold of the movable mold (12) and the intermediate mold (21) which move in the same direction.

4. The injection molding machine according to any one of claims 1 to 3,
wherein in a case where the distance monitored by the distance monitoring unit (712) is equal to or less than a predetermined value, the movement processing unit (711) is configured to increase a movement speed of a preceding mold of the movable mold (12) and the intermediate mold (21) which move in the same direction.

5. An injection molding machine, comprising:
a drive unit (160, 540) which is configured to move a movable mold (12) close to or away from a stationary mold (11) and to move an intermediate mold (21) disposed between the movable mold (12) and the stationary mold (11) close to or away from the stationary mold (11);
a movement processing unit (711) which is configured to control a movement of the movable mold (12) and a movement of the intermediate mold (21),
wherein the movement processing unit (711) is configured to execute a collision avoidance processing when both the movable mold (12) and the intermediate mold (21) are moved in the same direction such that a collision between the molds is avoided,
**characterized in that**
said collision avoidance processing comprises that, based on a position of one of the movable mold (12) and the intermediate mold (21), the movement processing unit (711) is configured to control a position of the other of the movable mold (12) and the intermediate mold (21);
the injection molding machine includes a collision avoidance processing necessity determination unit (713) which determines necessity of the collision avoidance processing by the movement processing unit (711) and which is configured to determine that the collision avoidance processing is unnecessary if the stage of the mold closing process reaches the final stage and/or if the stage of the mold opening process reaches the initial stage.

## Patentansprüche

1. Spritzgießmaschine, umfassend:
eine Antriebseinheit (160, 540), welche konfiguriert ist, eine bewegliche Form (12) nahe zu oder weg von einer stationären Form (11) zu bewegen und eine dazwischenliegende Form (21), die zwischen der beweglichen Form (12) und der stationären Form (11) angeordnet ist, nahe zu oder weg von der stationären Form (11) zu bewegen;
eine Bewegungsverarbeitungseinheit (711), welche konfiguriert ist, eine Bewegung der beweglichen Form (12) und eine Bewegung der dazwischenliegenden Form (21) zu steuern;
eine Abstandsüberwachungseinheit (712), welche konfiguriert ist, einen Abstand zwischen der beweglichen Form (12) und der dazwischenliegenden Form (21) zu überwachen, wenn sowohl die bewegliche Form (12) als auch die dazwischenliegende Form (21) in dieselbe Richtung bewegt werden,
wobei die Bewegungsverarbeitungseinheit (711) konfiguriert ist, eine Kollisionsvermeidungsverarbeitung auszuführen, wenn sowohl die bewegliche Form (12) als auch die dazwischenliegende Form (21) in dieselbe Richtung bewegt werden, derart, dass eine Kollision zwischen den Formen vermieden wird,
**dadurch gekennzeichnet, dass**
die Kollisionsvermeidungsverarbeitung auf dem überwachten Abstand zwischen der beweglichen Form (12) und der dazwischenliegenden Form (21) basiert;
die Spritzgießmaschine eine Bestimmungseinheit für die Notwendigkeit einer Kollisionsvermeidungsverarbeitung (713) enthält, welche eine Notwendigkeit der Kollisionsvermeidungsverarbeitung durch die Bewegungsverarbeitungseinheit (711) bestimmt und welche konfiguriert ist, zu bestimmen, dass die Kollisionsvermeidungsverarbeitung unnötig ist, wenn die Stufe des Formschließungsprozesses die Endstufe erreicht und/oder die Stufe des Formöffnungsprozesses die Anfangsstufe erreicht.

2. Spritzgießmaschine nach Anspruch 1,
wobei in einem Fall, in dem der von der Abstandsüberwachungseinheit (712) überwachte Abstand gleich oder kleiner als ein vorgegebener Wert ist, die Bewegungsverarbeitungseinheit (711) konfiguriert ist, eine relative Geschwindigkeit zwischen der beweglichen Form (12) und der dazwischenliegenden Form (21), welche sich in dieselbe Richtung bewegen, zu ändern, derart, dass eine Kollision zwischen der beweglichen Form (12) und der dazwischenliegenden Form (21) vermieden wird.

3. Spritzgießmaschine nach Anspruch 1 oder 2,
wobei in einem Fall, in dem der von der Abstandsüberwachungseinheit (712) überwachte Abstand gleich oder kleiner als ein vorgegebener Wert ist, die Bewegungsverarbeitungseinheit (711) konfiguriert ist, eine Bewegungsgeschwindigkeit einer nachfolgenden Form der beweglichen Form (12) und der dazwischenliegenden Form (21), welche sich in dieselbe Richtung bewegen, herabzusetzen.

4. Spritzgießmaschine nach einem der Ansprüche 1 bis 3, wobei in einem Fall, in dem der von der Abstandsüberwachungseinheit (712) überwachte Abstand gleich oder kleiner als ein vorgegebener Wert ist, die Bewegungsverarbeitungseinheit (711) konfiguriert ist, eine Bewegungsgeschwindigkeit einer vorausgehenden Form der beweglichen Form (12) und der dazwischenliegenden Form (21), welche sich in dieselbe Richtung bewegen, zu erhöhen.

5. Spritzgießmaschine, umfassend:
eine Antriebseinheit (160, 540), welche konfiguriert ist, eine bewegliche Form (12) nahe zu oder weg von einer stationären Form (11) zu bewegen und eine dazwischenliegende Form (21), die zwischen der beweglichen Form (12) und der stationären Form (11) angeordnet ist, nahe zu oder weg von der stationären Form (11) zu bewegen;
eine Bewegungsverarbeitungseinheit (711), welche konfiguriert ist, eine Bewegung der beweglichen Form (12) und eine Bewegung der dazwischenliegenden Form (21) zu steuern,
wobei die Bewegungsverarbeitungseinheit (711) konfiguriert ist, eine Kollisionsvermeidungsverarbeitung auszuführen, wenn sowohl die bewegliche Form (12) als auch die dazwischenliegende Form (21) in dieselbe Richtung bewegt werden, derart, dass eine Kollision zwischen den Formen vermieden wird,
**dadurch gekennzeichnet, dass**
die Kollisionsvermeidungsverarbeitung umfasst, dass basierend auf einer Position von einer der beweglichen Form (12) und der dazwischenliegenden Form (21), die Bewegungsverarbeitungseinheit (711) konfiguriert ist, eine Position der anderen von der beweglichen Form (12) und der dazwischenliegenden Form (21) zu steuern;
die Spritzgießmaschine eine Bestimmungseinheit für die Notwendigkeit der Kollisionsvermeidungsverarbeitung (713) enthält, welche die Notwendigkeit der Kollisionsvermeidungsverarbeitung durch die Bewegungsverarbeitungseinheit (711) bestimmt, und welche konfiguriert ist, zu bestimmen, dass die Kollisionsvermeidungsverarbeitung unnötig ist, wenn die Stufe des Formverschließungsprozesses die Endstufe erreicht, und/oder wenn die Stufe des Formöffnungsprozesses die Anfangsstufe erreicht.

## Revendications

1. Une machine de moulage par injection, comprenant :
une unité d'entraînement (160, 540) qui est configurée de manière à déplacer un moule mobile (12) à proximité ou à distance d'un moule fixe (11), et à déplacer un moule intermédiaire (21), disposé entre le moule mobile (12) et le moule fixe (11), à proximité ou à distance du moule fixe (11) ;
une unité de traitement de déplacement (711) qui est configurée de manière à commander un déplacement du moule mobile (12) et un déplacement du moule intermédiaire (21) ;
une unité de surveillance de distance (712) qui est configurée de manière à surveiller une distance entre le moule mobile (12) et le moule intermédiaire (21) lorsque le moule mobile (12) et le moule intermédiaire (21) sont tous deux déplacés dans la même direction ;
dans laquelle l'unité de traitement de déplacement (711) est configurée de manière à exécuter un traitement d'évitement de collision lorsque le moule mobile (12) et le moule intermédiaire (21) sont tous deux déplacés dans la même direction, de sorte qu'une collision entre les moules est évitée ;
**caractérisée en ce que** :
ledit traitement d'évitement de collision est basé sur la distance surveillée entre le moule mobile (12) et le moule intermédiaire (21) ;
la machine de moulage par injection inclut une unité de détermination de nécessité de traitement d'évitement de collision (713) qui détermine la nécessité du traitement d'évitement de collision par l'unité de traitement de déplacement (711) et qui est configurée de manière à déterminer que le traitement d'évitement de collision est inutile si le stade du processus de fermeture de moule atteint le stade final et/ou si le stade du processus d'ouverture de moule atteint le stade initial.

2. La machine de moulage par injection selon la revendication 1,
dans laquelle, dans le cas où la distance surveillée par l'unité de surveillance de distance (712) est égale ou inférieure à une valeur prédéterminée, l'unité de traitement de déplacement (711) est configurée de manière à modifier une vitesse relative entre le moule mobile (12) et le moule intermédiaire (21) qui se déplacent dans la même direction, de sorte qu'une collision entre le moule mobile (12) et le moule intermédiaire (21) est évitée.

3. La machine de moulage par injection selon la revendication 1 ou 2,
dans laquelle, dans le cas où la distance surveillée par l'unité de surveillance de distance (712) est égale ou inférieure à une valeur prédéterminée, l'unité de traitement de déplacement (711) est configurée de manière à diminuer une vitesse de déplacement d'un moule successif du moule mobile (12) et du moule intermédiaire (21) qui se déplacent dans la même direction.

4. La machine de moulage par injection selon l'une quelconque des revendications 1 à 3,
dans laquelle, dans le cas où la distance surveillée par l'unité de surveillance de distance (712) est égale ou inférieure à une valeur prédéterminée, l'unité de traitement de déplacement (711) est configurée de manière à augmenter une vitesse de déplacement d'un moule précédent du moule mobile (12) et du moule intermédiaire (21) qui se déplacent dans la même direction.

5. La machine de moulage par injection, comprenant :
une unité d'entraînement (160, 540) qui est configurée de manière à déplacer un moule mobile (12) à proximité ou à distance d'un moule fixe (11), et à déplacer un moule intermédiaire (21), disposé entre le moule mobile (12) et le moule fixe (11), à proximité ou à distance du moule fixe (11) ;
une unité de traitement de déplacement (711) qui est configurée de manière à commander un déplacement du moule mobile (12) et un déplacement du moule intermédiaire (21) ;
dans laquelle l'unité de traitement de déplacement (711) est configurée de manière à exécuter un traitement d'évitement de collision lorsque le moule mobile (12) et le moule intermédiaire (21) sont tous deux déplacés dans la même direction, de sorte qu'une collision entre les moules est évitée ;
**caractérisée en ce que** :
ledit traitement d'évitement de collision implique que, sur la base d'une position d'un moule parmi le moule mobile (12) et le moule intermédiaire (21), l'unité de traitement de déplacement (711) est configurée de manière à commander une position de l'autre moule parmi le moule mobile (12) et le moule intermédiaire (21) ;
la machine de moulage par injection inclut une unité de détermination de nécessité de traitement d'évitement de collision (713) qui détermine la nécessité du traitement d'évitement de collision par l'unité de traitement de déplacement (711) et qui est configurée de manière à déterminer que le traitement d'évitement de collision est inutile si le stade du processus de fermeture de moule atteint le stade final et/ou si le stade du processus d'ouverture de moule atteint le stade initial.
